# FASCICULE DE BREVET EUROPEEN

(11) **EP 1 523 442 B1**
(45) Date de publication et mention de la délivrance du brevet: **28.09.2016**
(21) Numéro de dépôt: 03755603.2
(22) Date de dépôt: 15.07.2003
(51) Int. Cl.: B64D 11/00

(54) **MODULE DE CABINE D'AERONEF**
FLUGZEUGKABINENMODUL
AIRCRAFT CABIN MODULE

(30) Priorité: 19.07.2002 FR 0209181
(43) Date de publication de la demande: 20.04.2005
(73) Titulaire: Airbus, 31700 Blagnac (FR)
(72) Inventeur: SAINT-JALMES, Bruno, 31400 Toulouse (FR)
(74) Mandataire: Santarelli
(86) Numéro de dépôt international: PCT/FR2003/002229
(87) Numéro de publication internationale: WO 2004/009443

(56) Documents cités:
- EP-A- 0 850 834
- DE-A- 1 811 637
- FR-A- 917 909
- FR-A- 2 256 857
- FR-A- 2 303 711
- FR-A- 2 426 608
- US-A- 1 731 531
- US-A- 5 024 398
- US-A- 5 677 603
- US-B1- 6 398 164

## Description

La présente invention concerne un module de cabine pour aéronef.

Les aéronefs actuels proposent différentes classes de confort pour leurs passagers et les membres d'équipage. On trouve alors des sièges plus ou moins confortables (dossiers inclinables, sièges avec soutien prévu pour les jambes, sièges convertibles en lit etc...). L'espace alloué à chaque passager est lui aussi plus ou moins important selon la classe.

Les voyageurs peuvent donc bénéficier d'un confort de couchage important mais ne disposent généralement pas, comme c'est le cas par exemple dans un train couchette, d'un espace clos intime comme décrit par exemple dans le document FR917909 concernant un perfectionnement aux dispositions de couchage pour passagers dans un aéroplane sous forme de cabines munies de couchettes.

Ceci s'explique par les contraintes de sécurité que l'on trouve à bord d'un aéronef. Parmi ces contraintes, on relèvera les suivantes. Les passagers doivent décoller et atterrir en position assise, dans le sens de déplacement de l'avion ou dans le sens opposé. En outre, lors de ces phases de décollage et d'atterrissage, le personnel de bord, lui aussi installé assis sur un siège orienté longitudinalement par rapport au déplacement de l'avion, doit pouvoir surveiller la majorité des passagers, pour surveiller notamment que tout se passe bien et que, par exemple, aucun passager ne se lève durant ces phases de décollage et d'atterrissage.

Il a donc été jusqu'à présent considéré que la réalisation de compartiments individuels pour un ou pour plusieurs passagers n'était pas adaptée à un aéronef.

La présente invention a pour but de fournir toutefois un module de cabine pour aéronef permettant de recréer un espace comparable à un compartiment tel qu'il en existe dans des trains couchettes. Bien entendu, un tel module devra répondre aux normes de sécurité établies pour l'aviation civile.

À cet effet, elle propose un module de cabine d'aéronef de forme rectangulaire allongée tel que décrit dans la revendication 1.

Un tel module est compatible avec les contraintes existant dans un aéronef, tant en matière d'encombrement que de sécurité.

Un tel module est avantageusement équipé d'un module de service disposé le long d'une petite paroi. Dans un tel module selon l'invention, le module de service est de préférence disposé à côté de la porte d'accès au module.

Dans une première forme de réalisation d'un module selon l'invention, un siège de chaque espace de vie est d'un type transformable et forme lesdits éléments pouvant former la surface de couchage. Dans ce cas, le siège est avantageusement monté pivotant autour d'un axe vertical de telle manière que la surface de couchage puisse être orientée transversalement.

Dans une autre forme de réalisation, les éléments pouvant former une surface de couchage comportent par exemple un panneau monté pivotant entre une position sensiblement verticale relevée contre l'espace sanitaire et une position rabattue sensiblement horizontale. Dans cette autre forme de réalisation, les éléments pouvant former une surface de couchage comportent par exemple en outre une surface d'appui sensiblement horizontale disposée le long de la paroi de cabine et coopérant avec le panneau pivotant lorsque celui-ci est en position rabattue pour former la surface de couchage. On peut prévoir que cette surface d'appui forme un siège muni éventuellement d'un dossier.

Dans une variante de réalisation, un second siège est prévu dans le module. Ce second siège peut être un strapontin, ou autre. Un siège d'angle peut être disposé entre les deux sièges pour les relier et former ainsi une banquette d'angle.

Les portions transparentes réalisées dans les parois de module sont de préférence occultables. Ainsi, durant les phases de décollage et d'atterrissage, les portions transparentes restent transparentes et durant le vol de croisière, ces portions sont occultées. Une forme de réalisation préférentielle prévoit qu'au moins une portion transparente comporte une couche de cristaux liquides associée à des moyens pour soumettre cette couche de cristaux liquides à une différence de potentiel électrique, cette couche étant opaque ou translucide selon que la différence de potentiel appliquée. Dans une autre forme de réalisation, au moins une portion transparente est équipée d'un store ou similaire.

Le module de service est par exemple un équipement sanitaire présentant au moins un point d'eau, par exemple un lavabo ou une douche. L'équipement sanitaire peut comporter un lavabo monté mobile entre une position escamotée à l'intérieur de l'équipement sanitaire et une position sortie à l'extérieur de l'équipement sanitaire. Dans ce cas, l'équipement sanitaire présente de préférence une porte d'accès et l'ouverture de cette porte d'accès à l'équipement sanitaire commande avantageusement le passage du lavabo de sa position escamotée vers sa position sortie.

Le module de service peut également être un espace de rangement, ou bien un module d'assistance médicale, ou bien un meuble office équipé pour la restauration des passagers, ou ... etc. Ce module peut être destiné à l'usage des passagers voyageant dans le module de cabine, ou du personnel navigant commercial, ou encore de tierces personnes (médecins, ...).

Les parois autres que la paroi de cabine, le module de service et le siège au nombre d'au moins un sont munis de préférence chacun de moyens de fixation pour leur fixation sur des rails de fixation longitudinaux disposés dans le sol de la cabine. De tels rails sont quasiment toujours prévus dans des avions destinés au transport de passagers pour permettre la fixation de sièges. Les moyens de fixation utilisés pour les éléments constitutifs d'un module selon l'invention seront par exemple les mêmes que ceux utilisés habituellement pour la fixation de sièges, avec une éventuelle adaptation.

À titre d'exemple, un module selon l'invention présente une longueur comprise entre 1,9 m et 3,0 m et une largeur au sol, dans la direction transversale, comprise entre 1,4 m et 2,1 m.

La présente invention concerne également un ensemble de modules tels que décrits ci-dessus, alignés les uns à côté des autres le long d'un couloir, caractérisé en ce que chaque paroi de module, sauf éventuellement une grande paroi se trouvant à une extrémité de l'ensemble de modules, comporte une portion transparente et en ce que les portions transparentes sont alignées.

Dans un tel ensemble, ledit siège de chaque module de l'ensemble ayant une configuration dans laquelle il est orienté parallèlement au couloir se trouve de préférence sensiblement dans l'alignement des portions transparentes.

La présente invention concerne aussi un tronçon de cabine d'aéronef, caractérisé en ce qu'il comporte au moins un module tel que décrit plus haut. Ce tronçon de cabine d'aéronef comporte par exemple un couloir central de part et d'autre duquel se trouve à chaque fois au moins un module.

Enfin, cette invention concerne un aéronef, caractérisé en ce qu'il comporte au moins un module selon l'invention.

Des détails et avantages de l'invention ressortiront mieux de la description qui suit, faite en référence au dessin schématique annexé, sur lequel :
Les figures 1 à 5 montrent en vue de dessus un ensemble de modules de cabine selon l'invention dans diverses configurations,
La figure 6 montre schématiquement en coupe le tronçon de cabine d'avion de la figure 3, et
Les figures 7 à 9 montrent en perspective trois formes de réalisation d'un module de cabine selon l'invention.

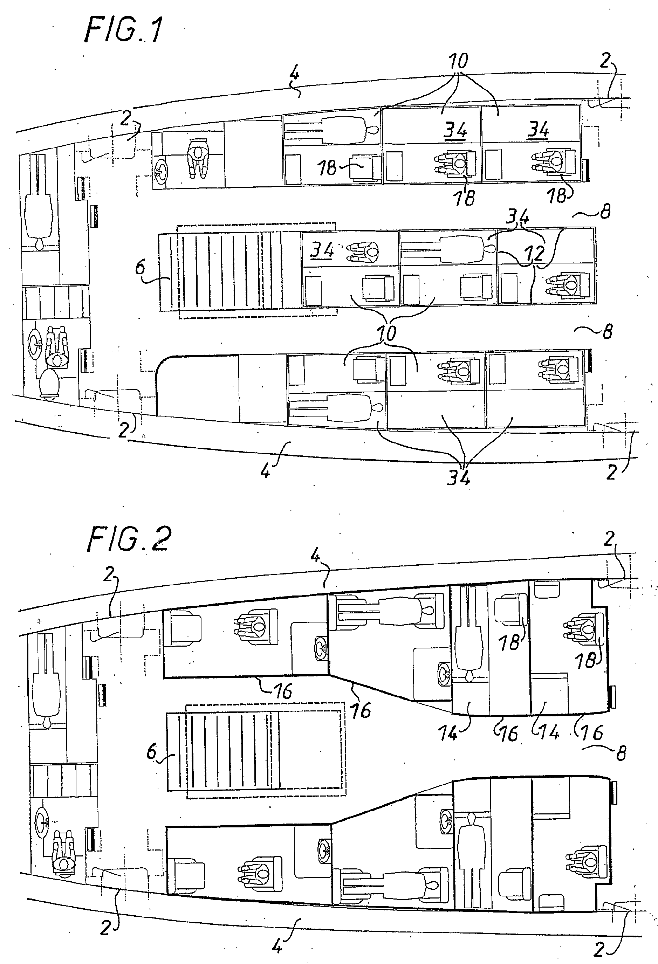

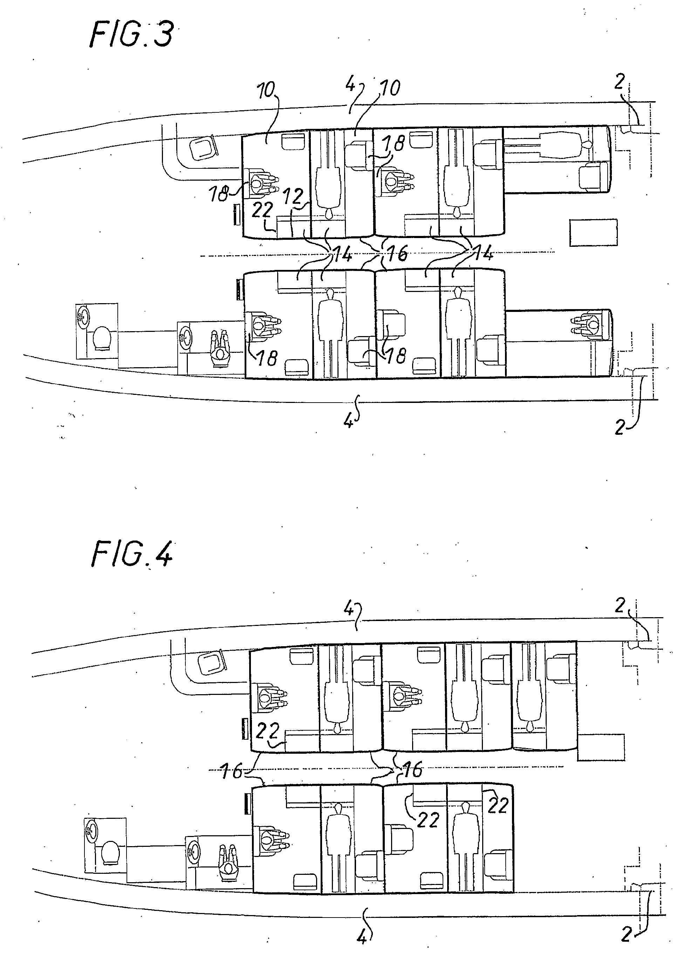

Les figure 1 à 5 représentent schématiquement l'espace habitable d'un tronçon d'une cabine d'avion. Dans le cas des figures 1 et 2, ce tronçon est situé entre deux issues de secours 2 successives longitudinalement. Dans le cas des figures 3 à 5, ce tronçon se trouve à une extrémité de l'avion et donc seulement deux issues de secours 2 sont représentées sur ces figures. Une paroi de cabine 4 longitudinale délimite à chaque fois cet espace sur les deux côtés de l'avion. Des hublots (non représentés) sont éventuellement réalisés dans chaque paroi de cabine 4.

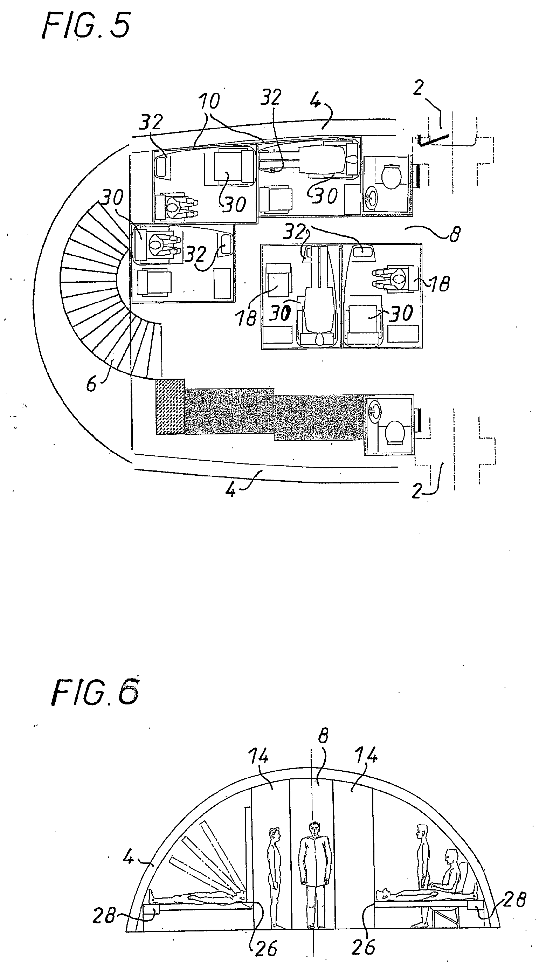

L'avion dont des tronçons sont représentés ici est un avion présentant un pont supérieur et un pont inférieur. On retrouve ainsi sur les figures 1, 2 et 5 un escalier 6, droit (figures 1 et 2) ou courbe (figure 5), qui permet d'accéder d'un pont à l'autre pont. Les configurations des tronçons représentés peuvent se trouver au pont supérieur ou au pont inférieur. Bien entendu, la présente invention concerne également des avions ne présentant qu'un seul niveau, ce qui est le cas pour la plus grande partie des avions actuellement en service.

Dans chaque configuration représentée, un couloir 8 s'étend longitudinalement par rapport au tronçon de cabine. De part et d'autre de ce couloir 8 se trouvent à chaque fois des modules 10 destinés à recevoir chacun un passager et éventuellement un visiteur ou bien un membre de l'équipage. Sur la figure 1, deux couloirs 8 sont réalisés. On a alors trois rangées de modules 10, chaque rangée s'étendant dans le sens longitudinal : une rangée le long de chaque paroi de cabine 4 et une rangée dans l'alignement de l'escalier 6. Sur la figure 2, le couloir 8 est disposé en position centrale et présente une forme de Y au niveau de l'escalier 6. Les figures 1 et 2 correspondent ici à un même tronçon de cabine mais aménagé de façon différente. Sur les figures 3 et 4 se trouve un seul couloir 8 longitudinal central tandis que sur la figure 5 le couloir 8 est coudé.

La largeur du couloir 8 est par exemple d'environ 0,75 m et sa longueur est adaptée selon la configuration choisie. Chaque module 10 présente quant à lui par exemple une longueur comprise entre 2,00 m et 3,00 m et une largeur par exemple comprise entre 1,40 m et 2 m. La forme générale d'un module est rectangulaire mais on remarque par exemple sur la figure 2, dans laquelle le couloir 8 présente une forme en Y, que pour s'adapter à la forme du couloir 8, ou d'un autre élément de l'avion, une paroi de la cabine pourra être inclinée, cassée ou incurvée.

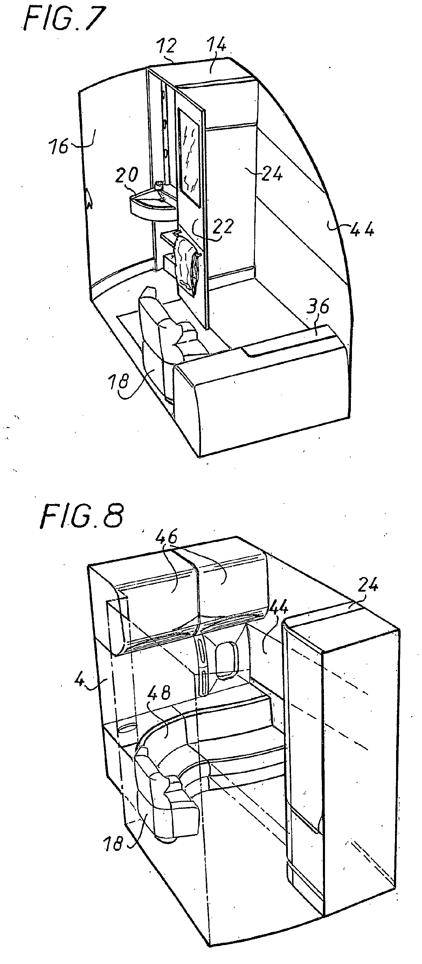

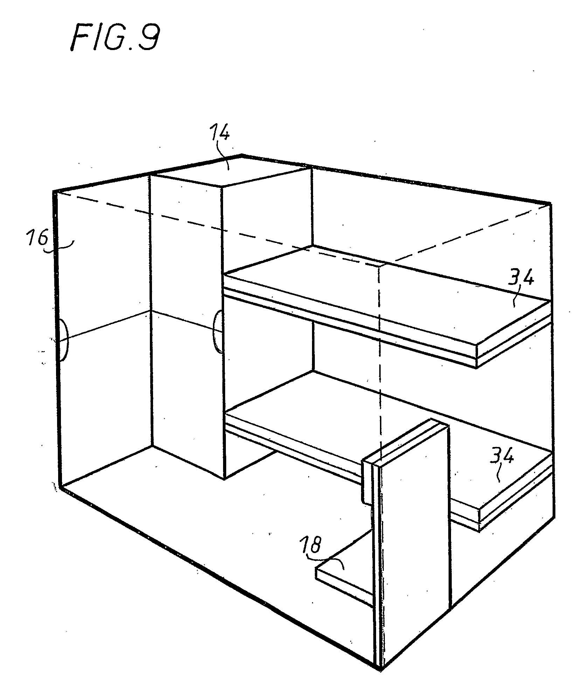

Chaque module 10 est délimité d'une part par un sol correspondant au sol de la cabine et par un plafond et d'autre part par deux parois longitudinales et deux parois transversales. Dans certains cas le plafond peut être constitué de la paroi de la cabine 4 car celle-ci est de forme cylindrique circulaire. Comme déjà indiqué, les figures du dessin représentent des modules 10 à l'intérieur d'un avion long courrier présentant deux ponts. Les figures 6 et 7 représentent des modules se trouvant au pont supérieur tandis que les figures 8 et 9 représentent un module 10 se trouvant au pont inférieur. Dans les modules situés au pont supérieur, le plafond épouse la forme du tronçon de cabine qui est arrondie, le tronçon de cabine étant de forme générale cylindrique circulaire.

Les parois transversales (dans le sens de la largeur du module 10) et les parois longitudinales (dans le sens de la longueur du module 10) peuvent correspondre à une paroi de cabine 4 ou à une cloison 12 séparant le module 10 du couloir 8 correspondant d'un module 10 voisin.

Chaque module 10 est équipé en outre d'un siège 18 éventuellement pivotant et de moyens permettant de réaliser une surface de couchage. Certains modules 10 sont équipés en outre d'un module de service 14 (figures 3, 4, 7 et 8). Lorsque la paroi de séparation du module avec le couloir 8 correspondant est une paroi transversale du module, ce module de service 14 est alors de préférence disposé le long du couloir 8. L'accès au module 10 se fait alors à partir du couloir 8 par une porte 16 disposée à côté du module de service 14, à chaque fois entre celui-ci et une paroi longitudinale du module.

Chaque module de service 14 est de forme globale parallélépipédique et s'étend du sol au plafond du module 10 dans lequel il se trouve. Chaque module de service 14 est par exemple équipé d'un lavabo 20 (figure 7) et constitue ainsi un cabinet de toilette pour le passager du module. L'accès au cabinet de toilette se fait par une porte 22 (figure 7) réalisée dans une paroi transversale du cabinet de toilette.

Des moyens de couchage sont présents dans chaque module mais ils sont réalisés de diverses manières. Dans le cas où le module 10 est équipé d'un module de service, chaque lit représenté est par exemple, comme montré sur les figures 3, 4, 6 à 8, réalisé en deux parties. Une première partie 24 est montée pivotante autour d'un axe horizontal 26 (figure 6) et une seconde partie fixe 28 est disposée, dans la forme de réalisation montrée sur les figures 3 et 4, le long de la paroi de cabine 4. La première partie 24 pivote entre une position verticale relevée le long de la paroi longitudinale du module de service 14 située à l'intérieur du module 10 et une position horizontale rabattue dans laquelle elle s'étend depuis le module de service 14 vers la paroi de la cabine 4 jusqu'à la partie fixe 28. La partie fixe 28 du lit peut être aussi utilisée, lorsque la première partie 24 pivotante est dans sa position relevée, comme siège pour un visiteur (figure 8 par exemple).

Les moyens de couchage peuvent aussi être formés par un siège transformable en lit. Ainsi, les modules de la figure 5 comportent un premier siège 18 et un second siège 30 dont on peut se servir pour former un lit. Dans la forme de réalisation représentée, le siège 30 coopère avec un repose-pieds 32 pour former une surface sensiblement horizontale destinée à recevoir un passager. Le siège 30 comporte par exemple un mécanisme permettant de ramener le dossier du siège dans une position sensiblement horizontale.

Une autre forme de réalisation des moyens de couchage est de prévoir tout simplement un lit fixe 34 comme représenté pour les modules 10 de la figure 1. Ce lit s'étend alors par exemple le long d'une paroi longitudinale du module, par exemple sur toute la longueur de celle-ci, comme représenté sur la figure 1. Dans une variante de réalisation, représentée sur la figure 9, on prévoit deux lits fixes 34 superposés. Cette configuration est plutôt adaptée, dans le cas d'un avion à deux ponts, aux modules du pont inférieur. Sur la figure 9, en variante de la forme de réalisation représentée sur la figure 1, chaque lit fixe 34 est disposé le long d'une paroi longitudinale du module entre un module de service 14 et la paroi transversale opposée.

Dans chaque module 10, il y a un siège 18, éventuellement pivotant, pour permettre au passager de s'installer en position assise en étant orienté dans le sens de la marche ou dans le sens opposé, notamment pour les phases de décollage et d'atterrissage de l'avion. Lorsque le siège est pivotant, il peut être orienté selon le souhait du passager durant le vol. Sur la figure 5, un siège 18 d'un module central a été représenté dans une orientation longitudinale par rapport au déplacement de l'avion tandis que dans le module 10 voisin le siège 18 a été représenté dans une orientation transversale.

La figure 7 montre en perspective, avec plus de détails, un premier exemple d'aménagement intérieur d'un module 10. Il s'agit d'un module différent de ceux représentés sur les figures 1 à 6. Les mêmes références sont toutefois utilisées pour désigner des éléments similaires.

On retrouve ainsi dans ce module 10 un module de service 14 (qui est ici un cabinet de toilette) disposé le long d'une cloison 12 séparant le module 10 d'un couloir d'accès et à côté d'une porte 16, un siège pivotant 18 et un lit en deux parties. La figure 7 représente également une cloison 12 de séparation avec un module 10 voisin. Une cloison et la paroi de cabine n'ont pas été représentées sur cette figure 7 pour permettre de mieux visualiser l'intérieur du module 10. Une cloison 12 de séparation avec un autre module 10 voisin peut être éventuellement amovible. Il devient alors possible de créer un module double pouvant accueillir deux passagers en offrant un plus grand espace disponible, notamment lorsque les lits sont en position repliée contre le module de service.

Le lit est d'une configuration légèrement différente de celle décrite en référence à la figure 6. On retrouve ici une partie pivotante 24 se relevant en position verticale contre le module de service 14 venant coopérer avec une autre partie 36 pour former le lit. Dans ce cas de figure, l'autre partie 36 du lit est également pivotante. Elle pivote autour d'un axe horizontal parallèle à l'axe 26 de pivotement de la partie pivotante 24 qui est sensiblement plus longue que la partie 36 complémentaire. Cette partie 36 du lit peut servir de strapontin lorsque la partie pivotante 24 du lit est relevée contre le module de service 14. Elle constitue ainsi un second siège disponible à l'intérieur de chaque module 10.

Le cabinet de toilette est équipé ici d'un lavabo 20 rabattable. Lorsque la porte d'accès 22 du module 10 vers le cabinet de toilette est fermée, le lavabo 20 est relevé à la verticale dans le cabinet de toilette et lorsque la porte 22 s'ouvre, le lavabo 20 peut se rabattre et vient en position horizontale, en saillie hors du cabinet de toilette. Le passager utilisant le lavabo 20 a ainsi plus de place car il n'est pas obligé de rentrer à l'intérieur du cabinet de toilette.

Lorsque le module 10 est destiné à un passager, et non au personnel navigant commercial ou aux pilotes, les cloisons 12 séparant deux modules 10 sont toutes avantageusement équipées d'une portion transparente 44 permettant ainsi à un membre de l'équipage de l'avion de voir ce qui se passe dans le module 10, notamment au cours des phases de décollage et d'atterrissage de l'avion. Cette portion transparente 44 se présente sous la forme d'une bande horizontale centrée à environ 2/3 de la hauteur de la cloison 12 de séparation. Lorsque plusieurs modules 10 sont alignés, comme on peut le voir sur les figures 1 à 4, on prévoit d'aligner les portions transparentes 44 de telle sorte qu'un membre de l'équipage assis dans l'alignement des modules puisse voir à l'intérieur de chacun de ceux-ci et ainsi veiller à la sécurité des passagers se trouvant dans les modules, notamment durant les phases de décollage et d'atterrissage de l'avion. Durant ces phases, les passagers sont installés sur un siège orienté longitudinalement par rapport au sens de déplacement de l'avion (et équipé d'une ceinture de sécurité). Les portions transparentes 44 sont alors placées sur les cloisons 12 de manière à voir, au moins en partie, ces sièges. On a donc un alignement entre les portions transparentes 44 et les sièges 18 destinés à recevoir les passagers durant les phases de décollage et d'atterrissage.

Pour une cloison 12 se trouvant à l'extrémité d'un alignement de modules 10 il peut être inutile de prévoir une portion transparente 44 ou bien encore dans le cas d'un module isolé, seule une portion transparente 44 peut être envisagée. Toutefois, dans la pratique il est prévu d'avoir une portion transparente 44 sur toutes les cloisons 12 lorsque les modules 10 sont destinés à des passagers.

Durant le vol, ces portions transparentes sont opacifiables ou occultables. Différents moyens peuvent être mis en oeuvre dans ce but. On peut par exemple prévoir des stores, persiennes, volets ou similaires. Chaque passager dans son module peut alors choisir d'occulter ou non la paroi transparente 44 de son espace de vie. Dans une forme de réalisation préférée, les portions transparentes 44 comportent une couche de cristaux liquides et des moyens permettant de soumettre cette couche à une différence de potentiel électrique. Ces cristaux liquides présentent la propriété de devenir opaques lorsqu'ils sont orientés d'une certaine manière, cette orientation étant obtenue par excitation électrique. Durant les phases de décollage et d'atterrissage les portions transparentes 44 sont telles que le personnel de bord puisse voir les passagers à l'intérieur des modules tandis que durant le reste du vol ces portions transparentes sont opacifiées.

La figure 8 montre une autre possibilité d'aménagement d'un module 10. Dans ce cas de figure, comme indiqué plus haut, le module 10 est situé au pont inférieur de l'avion. La paroi de cabine 4 est alors approximativement verticale. On peut alors prévoir des coffres à bagages 46 en partie haute de la paroi de cabine 4. Il est également possible de prévoir des rangements dans le module de service 14 ou bien le long de la paroi de cabine 4 en position basse.

Le siège 18 destiné à recevoir le passager durant les phases de décollage et d'atterrissage n'est ici pas pivotant mais reste fixe. Il est complété par un siège d'angle 48 et par la partie du lit disposée du côté de la paroi de cabine 4 pour former une banquette d'angle.

Dans toutes ces variantes de réalisation décrites ci-dessus, les divers éléments constitutifs de chaque module 10 (les cloisons 12, les sièges, le module de service 14, etc...) sont fixés au sol sur des rails de fixation. On utilise ici les rails de fixation qui sont prévus dans tout avion destiné au transport de passagers pour la fixation de sièges. Une série de rails longitudinaux sont prévus sur toute la largeur de la cabine. Des points d'ancrage régulièrement espacés (habituellement tous les pouces, soit avec un pas de 2,54 cm) le long de chaque rail sont prévus pour la fixation de sièges. Les moyens de fixation des divers éléments constitutifs du modules sont identiques à ceux utilisés classiquement pour la fixation de sièges sur les rails.

La présente invention ne se limite pas aux formes de réalisation décrites ci-dessus à titre d'exemples non limitatifs. Elle concerne aussi toutes les variantes de réalisation à la portée de l'homme du métier dans le cadre des revendications ci-après.

Ainsi par exemple de nombreuses variantes d'équipement peuvent être prévues dans les modules.

Le siège destiné à recevoir le passager durant les phases de décollage et d'atterrissage et disposé longitudinalement durant ces phases peut par exemple être un siège convertible en lit. Dans ce cas de figure, il n'est alors pas nécessaire de prévoir une surface de couchage distincte. Ce siège peut aussi se déplacer dans le module. On a vu plus haut que ce siège pouvait pivoter mais on peut aussi prévoir qu'il puisse se translater.

La description faite ci-dessus est faite en référence à un avion comportant deux ponts, ce qui implique pour chaque pont une hauteur sous plafond pour chaque pont est limitée. De ce fait, des formes de réalisation décrites prévoient un lit en deux parties. Avec une hauteur sous plafond plus importante, il serait toutefois aussi envisageable d'avoir un lit rabattable en une seule partie.

L'aménagement du module de service peut être différent de ce qui est décrit ci-dessus. On peut envisager d'équiper ce module de service pour en faire un espace sanitaire en prévoyant un lavabo comme indiqué dans la description mais il peut aussi, ou alternativement, être équipé d'une douche et/ou d'un WC. Ce module de service peut aussi être simplement un local de rangement, accessible depuis l'intérieur du module ou de l'extérieur de celui-ci. Dans le cas d'un avion de rapatriement sanitaire, le module de service peut servir à loger du matériel médical. Ce module de service peut aussi être équipé d'un meuble office pour préparer des repas et/ou des boissons chaudes. De nombreuses autres utilisations peuvent ainsi également être prévues.

## Revendications

1. Module de cabine d'aéronef de forme rectangulaire allongée comportant :
- deux grandes parois reliées par deux petites parois, deux des parois du module étant disposées transversalement par rapport à une direction de déplacement de l'aéronef,
- une porte (16) montée dans une ouverture réalisée dans une paroi séparant le module (10) d'un couloir (8),
- au moins un siège (18) ayant au moins une configuration dans laquelle il est orienté longitudinalement par rapport au sens de déplacement de l'aéronef,
le module comportant en outre des éléments (24, 28) pouvant former une surface de couchage pour au moins un passager,
**caractérisé en ce que** les deux parois du module disposées transversalement par rapport à la direction de déplacement de l'aéronef présentent une portion transparente (44) et **en ce que** lesdites portions transparentes (44) sont alignées avec le siège (18).

2. Module selon la revendication 1, **caractérisé en ce qu'**il comporte en outre un module de service (14) disposé le long d'une petite paroi.

3. Module selon la revendication 2, **caractérisé en ce que** le module de service (14) est disposé à côté de la porte (16).

4. Module selon l'une des revendications 1 à 3, **caractérisé en ce qu'**un siège (18) est d'un type transformable et forme lesdits éléments pouvant former la surface de couchage.

5. Module selon la revendication 4, **caractérisé en ce que** le siège (18) est monté pivotant autour d'un axe vertical.

6. Module selon la revendication 2, **caractérisé en ce que** les éléments pouvant former une surface de couchage comportent un panneau (24) monté pivotant entre une position sensiblement verticale relevée contre le module de service (14) et une position rabattue sensiblement horizontale.

7. Module selon la revendication 6, **caractérisé en ce que** les éléments pouvant former une surface de couchage comportent en outre une surface d'appui (28) sensiblement horizontale disposée le long de la petite paroi opposée et coopérant avec le panneau pivotant (24) lorsque celui-ci est en position rabattue pour former la surface de couchage.

8. Module selon la revendication 7, **caractérisé en ce que** la surface d'appui (28) forme un siège muni éventuellement d'un dossier.

9. Module selon l'une des revendications 1 à 8, **caractérisé en ce qu'**un second siège (30) est prévu dans le module de cabine.

10. Module selon la revendication 9, **caractérisé en ce qu'**un siège d'angle (48) relie les deux sièges (18, 30) formant ainsi une banquette d'angle.

11. Module selon l'une des revendications 1 à 10, **caractérisé en ce que** les portions transparentes (44) sont occultables.

12. Module selon la revendication 11, **caractérisé en ce qu'**au moins une portion transparente (44) comporte une couche de cristaux liquides associée à des moyens pour soumettre cette couche de cristaux liquides à une différence de potentiel électrique, cette couche étant opaque ou translucide selon que la différence de potentiel appliquée.

13. Module selon l'une des revendications 1 à 12, **caractérisé en ce qu'**au moins une portion transparente (44) est équipée d'un store ou similaire.

14. Module selon la revendication 2, **caractérisé en ce que** le module de service est un équipement sanitaire (14) présentant au moins un point d'eau.

15. Module selon la revendication 14, **caractérisé en ce que** l'équipement sanitaire comporte un lavabo monté mobile entre une position escamotée à l'intérieur de l'équipement sanitaire (14) et une position sortie à l'extérieur de l'équipement sanitaire (14).

16. Module selon la revendication 15, **caractérisé en ce que** l'équipement sanitaire présente une porte (22) d'accès, et **en ce que** l'ouverture de cette porte commande le passage du lavabo (20) de sa position escamotée vers sa position sortie.

17. Module selon la revendication 2, **caractérisé en ce que** le module de service (14) est un espace de rangement.

18. Module selon la revendication 2, **caractérisé en ce que** le module de service (14) est un module d'assistance médicale.

19. Module selon la revendication 2, **caractérisé en ce que** le module de service (14) est un meuble office équipé pour la restauration de passagers.

20. Module selon l'une des revendications 1 à 19, **caractérisé en ce que** les parois autres que la paroi de cabine, le module de service (14) et le siège (18) au nombre d'au moins un sont munis chacun de moyens de fixation pour leur fixation sur des rails de fixation longitudinaux disposés dans le sol de la cabine.

21. Module selon l'une des revendications 1 à 20, **caractérisé en ce qu'**il présente une longueur comprise entre 1,9 m et 3,0 m et une largeur au sol, dans la direction transversale, comprise entre 1,5 m et 2,1 m.

22. Ensemble de modules, **caractérisé en ce que** chaque module est un module (10) selon l'une des revendications 1 à 21, lesdits modules étant alignés les uns à côté des autres le long d'un couloir (8), et **en ce que** chaque grande paroi (12) de module, sauf éventuellement une grande paroi se trouvant à une extrémité de l'ensemble de modules, comporte une portion transparente (44), les portions transparentes étant alignées.

23. Tronçon de cabine d'aéronef, **caractérisé en ce qu'**il comporte au moins un module (10) selon l'une des revendications 1 à 21.

24. Tronçon de cabine d'aéronef selon la revendication 23, **caractérisé en ce qu'**il comporte un couloir central (8) de part et d'autre duquel se trouve au moins un module (10).

25. Aéronef, **caractérisé en ce qu'**il comporte au moins un module (10) selon l'une des revendications 1 à 21.

## Patentansprüche

1. Flugzeugkabinenmodul von länglich rechteckiger Form, umfassend:
- zwei große Wände, die durch zwei kleine Wände verbunden sind, wobei zwei der Wände des Moduls quer zu einer Bewegungsrichtung des Flugzeugs angeordnet sind,
- eine Tür (16), die in einer Öffnung befestigt ist, die in einer Wand ausgebildet ist, die das Modul (10) von einem Gang (8) trennt,
- mindestens einen Sitz (18), der mindestens eine Konfiguration aufweist, in der er in Längsrichtung zur Bewegungsrichtung des Flugzeugs ausgerichtet ist,
wobei das Modul ferner Elemente (24, 28) aufweist, die eine Liegefläche für mindestens einen Passagier bilden können,
**dadurch gekennzeichnet, dass** die zwei Wände des Moduls, die quer zu der Bewegungsrichtung des Flugzeugs angeordnet sind, einen transparenten Abschnitt (44) aufweisen, und dass die transparenten Abschnitte (44) mit dem Sitz (18) ausgerichtet sind.

2. Modul nach Anspruch 1, **dadurch gekennzeichnet, dass** es ferner ein Servicemodul (14) aufweist, das entlang einer kleinen Wand angeordnet ist.

3. Modul nach Anspruch 2, **dadurch gekennzeichnet, dass** das Servicemodul (14) neben der Tür (16) angeordnet ist.

4. Modul nach einem der Ansprüche 1 bis 3, **dadurch gekennzeichnet, dass** ein Sitz (18) von einem umwandelbaren Typ ist und die Elemente bildet, die die Liegefläche bilden können.

5. Modul nach Anspruch 4, **dadurch gekennzeichnet, dass** der Sitz (18) um eine vertikale Achse schwenkbar befestigt ist.

6. Modul nach Anspruch 2, **dadurch gekennzeichnet, dass** die Elemente, die eine Liegefläche bilden können, eine Platte (24) aufweisen, die zwischen einer im Wesentlichen vertikalen, gegen das Servicemodul (14) angehobenen Position und einer im Wesentlichen horizontalen, heruntergeklappten Position schwenkbar befestigt ist.

7. Modul nach Anspruch 6, **dadurch gekennzeichnet, dass** die Elemente, die eine Liegefläche bilden können, ferner eine im Wesentlichen horizontale Auflagefläche (28) aufweisen, die entlang der gegenüberliegenden kleinen Wand angeordnet ist und mit der schwenkbaren Platte (24) zusammenwirkt, wenn diese in der heruntergeklappten Position ist, um die Liegefläche zu bilden.

8. Modul nach Anspruch 7, **dadurch gekennzeichnet, dass** die Auflagefläche (28) einen Sitz bildet, der eventuell mit einer Rückenlehne ausgestattet ist.

9. Modul nach einem der Ansprüche 1 bis 8, **dadurch gekennzeichnet, dass** ein zweiter Sitz (30) in dem Kabinenmodul vorgesehen ist.

10. Modul nach Anspruch 9, **dadurch gekennzeichnet, dass** ein Ecksitz (48) die zwei Sitze (18, 30) verbindet, wodurch auf diese Weise eine Eckbank gebildet wird.

11. Modul nach einem der Ansprüche 1 bis 10, **dadurch gekennzeichnet, dass** die transparenten Abschnitte (44) abdeckbar sind.

12. Modul nach Anspruch 11, **dadurch gekennzeichnet, dass** mindestens ein transparenter Abschnitt (44) eine Flüssigkristallschicht aufweist, die mit Mitteln verbunden ist, um diese Flüssigkristallschicht einer elektrischen Potentialdifferenz zu unterwerfen, wobei diese Schicht je nach der angelegten Potentialdifferenz opak oder transluzent sein kann.

13. Modul nach einem der Ansprüche 1 bis 12, **dadurch gekennzeichnet, dass** mindestens ein transparenter Abschnitt (44) mit einem Rollo oder dergleichen ausgestattet ist.

14. Modul nach Anspruch 2, **dadurch gekennzeichnet, dass** das Servicemodul eine Sanitäreinrichtung (14) ist, die mindestens eine Wasserentnahmestelle aufweist.

15. Modul nach Anspruch 14, **dadurch gekennzeichnet, dass** die Sanitäreinrichtung ein Waschbecken aufweist, das zwischen einer in der Sanitäreinrichtung (14) eingefahrenen Position und einer aus der
Sanitäreinrichtung (14) ausgefahrenen Position beweglich befestigt ist.

16. Modul nach Anspruch 15, **dadurch gekennzeichnet, dass** die Sanitäreinrichtung eine Zugangstür (22) aufweist und dass das Öffnen dieser Tür den Übergang des Waschbeckens (20) von seiner eingefahrenen Position zu seiner ausgefahrenen Position steuert.

17. Modul nach Anspruch 2, **dadurch gekennzeichnet, dass** das Servicemodul (14) ein Stauraum ist.

18. Modul nach Anspruch 2, **dadurch gekennzeichnet, dass** das Servicemodul (14) ein Modul für medizinische Versorgung ist.

19. Modul nach Anspruch 2, **dadurch gekennzeichnet, dass** das Servicemodul (14) ein Büromöbel ist, das für die Verpflegung der Passagiere ausgestattet ist.

20. Modul nach einem der Ansprüche 1 bis 19, **dadurch gekennzeichnet, dass** die anderen Wände als die Kabinenwand, das Servicemodul (14) und der mindestens eine Sitz (18) jeweils mit Befestigungsmitteln für ihr Befestigen auf längsverlaufenden Befestigungsschienen ausgestattet sind, die in dem Kabinenboden angeordnet sind.

21. Modul nach einem der Ansprüche 1 bis 20, **dadurch gekennzeichnet, dass** es eine Länge, die zwischen 1,9 m und 3,0 m beträgt, und eine Breite am Boden in der Querrichtung aufweist, die zwischen 1,5 m und 2,1 m beträgt.

22. Anordnung von Modulen, **dadurch gekennzeichnet, dass** jedes Modul ein Modul (10) nach einem der Ansprüche 1 bis 21 ist, wobei die Module entlang einem Gang (8) aneinander gereiht sind, und dass jede große Modulwand (12), außer eventuell einer großen Wand, die sich an einem Ende der Anordnung von Modulen befindet, einen transparenten Abschnitt (44) aufweist, wobei die transparenten Abschnitte ausgerichtet sind.

23. Teilstück einer Flugzeugkabine, **dadurch gekennzeichnet, dass** es mindestens ein Modul (10) nach einem der Ansprüche 1 bis 21 aufweist.

24. Teilstück einer Flugzeugkabine nach Anspruch 23, **dadurch gekennzeichnet, dass** es einen Mittelgang (8) aufweist, auf dessen beiden Seiten sich mindestens ein Modul (10) befindet.

25. Flugzeug, **dadurch gekennzeichnet, dass** es mindestens ein Modul (10) nach einem der Ansprüche 1 bis 21 aufweist.

## Claims

1. Aircraft cabin module of elongated rectangular shape comprising:
two large walls connected by two small walls two of the walls of the module being arranged transversely to a direction in which the aircraft is configured to move,
a door (16) mounted in an opening implemented in a wall separating the module (10) from an aisle (8);
at least one seat (18) having at least one configuration in which it is positioned longitudinally in relation to the direction of movement of the aircraft;
the module further comprising elements (24, 28) configured to form a bedding surface for at least one passenger,
**characterised in that** the two walls of the module arranged transversely to the direction in which the aircraft is configured to move have a transparent portion (44) and **in that** the said transparent portions (44) are aligned with the seat (18).

2. Module according to claim 1, **characterised in that** it further comprises a service module (14) arranged along a small wall.

3. Module according to claim 2, **characterised in that** the service module (14) is arranged beside the door (16).

4. Module according to one of claims 1 to 3, **characterised in that** one seat (18) is of a convertible type and constitutes the said elements configured to form the bedding surface.

5. Module according to claim 4, **characterised in that** the seat (18) is set up pivoting around a vertical axis.

6. Module according to claim 2, **characterised in that** the elements configured to form a bedding surface comprise a panel (24) set up pivoting between a more or less vertical turned-up position against the service module (14) and a more or less horizontal turned-down position.

7. Module according to claim 6, **characterised in that** the elements configured to form a bedding surface further comprise a more or less horizontal support surface (28) arranged along the opposite small wall and cooperating with the pivoting panel (24) when the pivoting panel is in the turned-down position to form the bedding surface.

8. Module according to claim 7, **characterised in that** the support surface (28) forms a seat optionally equipped with a back.

9. Module according to one of claims 1 to 8, **characterised in that** a second seat (30) is provided in the cabin module.

10. Module according to claim 9, **characterised in that** a corner seat (48) connects the two seats (18, 30), thus forming a corner banquette.

11. Module according to one of claims 1 to 10, **characterised in that** the transparent portions (44) are configured to be obscured.

12. Module according to claim 11, **characterised in that** at least one transparent portion (44) comprises a liquid crystal layer combined with means for subjecting this liquid crystal layer to a difference of electric potential, this layer being opaque or translucent depending on the difference of electric potential applied.

13. Module according to one of claims 1 to 12, **characterised in that** at least one transparent portion (44) is equipped with a shading element or the like.

14. Module according to claim 2, **characterised in that** the service module is a bathroom facility (14) having at least one water source.

15. Module according to claim 14, **characterised in that** the bathroom facility comprises a washbasin set up movable between a retracted position inside the bathroom facility (14) and an extended position outside the bathroom facility (14).

16. Module according to claim 15, **characterised in that** the bathroom facility has an access door (22), and **in that** the opening of this door controls changeover of the washbasin (20) from its retracted to its extended position.

17. Module according to claim 2, **characterised in that** the service module (14) is a storage space.

18. Module according to claim 2, **characterised in that** the service module (14) is a medical-care module.

19. Module according to claim 2, **characterised in that** the service module (14) is a pantry unit equipped for passengers' refreshment.

20. Module according to one of claims 1 to 19, **characterised in that** the walls other than the cabin wall, the service module (14) and the seat (18) at least one in number are each equipped with fastening means for their attachment on longitudinal attachment rails arranged on the floor of the cabin.

21. Module according to one of claims 1 to 20, **characterised in that** the module has a length ranging between 1.9 m and 3.0 m and a width on the floor, in the transverse direction, ranging between 1.5 m and 2.1 m.

22. Series of modules, **characterised in that** each module is a module (10) according to one of claims 1 to 21, the said modules being aligned next to one another along an aisle (8), and **in that** each large module wall (12), except possibly for a large wall located at one end of the series of modules, comprises a transparent portion (44), the transparent portions being aligned.

23. Section of an aircraft cabin, **characterised in that** the section comprises at least one module (10) according to one of claims 1 to 21.

24. Section of an aircraft cabin according to claim 23, **characterised in that** the section comprises a central aisle (8) on either side of which is at least one module (10).

25. Aircraft, **characterised in that** it comprises at least one module (10) according to one of claims 1 to 21.
